(19) Europäisches Patentamt
European Patent Office
Office européen des brevets

(11) **EP 2 623 949 A1**

(12) **EUROPÄISCHE PATENTANMELDUNG**

(43) Veröffentlichungstag:
**07.08.2013 Patentblatt 2013/32**

(51) Int Cl.:
*G01M 13/04* *(2006.01)*     *G01N 29/14* *(2006.01)*

(21) Anmeldenummer: **12000622.6**

(22) Anmeldetag: **31.01.2012**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Siemens Aktiengesellschaft**
**80333 München (DE)**

(72) Erfinder:
• **Klos, Hans-Henning**
**90475 Nürnberg (DE)**
• **Müller, Klaus-Dieter, Dr.**
**90425 Nürnberg (DE)**

(54) **Zustandsüberwachungsvorrichtung und Verfahren zur Zustandsüberwachung von rotierenden mechanischen Bauteilen**

(57)    Zur Zustandsüberwachung von rotierenden mechanischen Bauteilen werden mittels zumindest einer an einem Maschinenteil, das einen Lagersitz für ein zu überwachendes Bauteil bildet oder mit diesem verbunden ist, montierten Ultraschallsensoreinheit akustische Emissionen des zu überwachenden Bauteils erfaßt. Mittels einer mit der Ultraschallsensoreinheit verbundenen Signalver-arbeitungseinheit werden schadens- bzw. schädigungskennzeichnende Anteile aus durch die Ultraschallsensoreinheit generierten Meßsignalen extrahiert. Aus extrahierten Meßsignalmerkmalen wird zumindest ein Zustandskennwert ermittelt. Vorzugsweise erfolgt anhand des zumindest einen Zustandskennwertes eine Zustandsklassifizierung des zu überwachenden Bauteils.

Fig. 1

EP 2 623 949 A1

**Beschreibung**

Eine Zustandsüberwachung von Lagern und Wellen erfolgt entsprechend herkömmlichen Lösungen häufig durch eine Ermittlung von Lagertemperatur, Schmierstofftemperatur oder Schmierstoffviskosität. Aus EP 1 387 165 A1 ist beispielsweise ein Verfahren zur Qualitätsüberwachung von in einem Getriebe befindlichen Schmieröl bekannt, bei dem aus dem Getriebe eine Schmierölprobe entnommen wird, die mittels eines Ionenmobilitätsspektrometers analysiert wird. Dabei wird die Schmierölprobe auf in einer Dampfphase des Schmieröls enthaltene Stoffe untersucht. Veränderung von Gehalt und Art der enthaltenen Stoffe in der Schmierölprobe werden als Ist-Zustand gegenüber vorbestimmten Stoffen in einer Dampfphase von ungebrauchtem Schmieröl ausgewertet. Aus einem Vergleich läßt sich dabei ein Maß für eine Schmierölalterung ableiten.

In EP 2 110 649 B1 ist ein Sensor mit einem ersten mechanisch schwingfähigen System beschrieben, dessen Resonanzfrequenz im Ultraschallbereich liegt und an eine materialspezifische Resonanzfrequenz eines zu überwachenden Prüflings angepaßt ist. Außerdem umfaßt der Sensor ein zweites mechanisch schwingfähiges System, dessen Resonanzfrequenz in einem hörbaren Frequenzbereich liegt. Mit dem ersten System ist eine erste Signalverarbeitungseinheit zur Erfassung einer Schadensproliferation des zu überwachenden Prüflings gekoppelt. Zusätzlich ist eine mit dem zweiten System gekoppelte zweite Signalverarbeitungseinheit zur Erfassung von eine bestehende Schädigung anzeigenden Schwingungsfrequenzen des zu überwachenden Prüflings vorgesehen. Mit der ersten und der zweiten Signalverarbeitungseinheit ist eine Auswertungseinheit zur Ermittlung eines Diagnoseergebnisses verbunden.

Aus WO 2010/009750 A1 ist ein Verfahren zur Zustandsermittlung und -überwachung von Wälzlagern bekannt, bei dem im Betrieb eines Wälzlagers ein erstes Sensorsignal in Form eines Schallemissionssignals in einem ersten Frequenzband im Ultraschallbereich erfaßt wird. Ein zweites Sensorsignal wird in einem zweiten Frequenzband niedrigerer Frequenz im Ultraschallbereich erfaßt. Aus einer Signalform des ersten Sensorsignals wird zumindest ein erster Kennwert für eine gerade erfolgende Schädigung des Wälzlagers ermittelt wird. Demgegenüber wird aus einer Signalform des zweiten Sensorsignals zumindest ein zweiter Kennwert für eine bereits erfolgte Schädigung des Wälzlagers ermittelt. Anhand eines Vergleichs des ersten Kennwerts mit einem von einer Drehzahl des Wälzlagers abhängigen ersten Referenzwert sowie des zweiten Kennwerts mit einem von der Drehzahl des Wälzlagers abhängigen zweiten Referenzwert wird der Zustand des Wälzlagers ermittelt.

In der älteren internationalen Patentanmeldung mit dem Anmeldeaktenzeichen PCT/EP2011/067078 ist ein Verfahren zur Zustandsermittlung und -überwachung von Wälzlagern beschrieben, bei dem im Betrieb eines Wälzlagers ein Sensorsignal in Form eines Schallemissionssignals in einem Frequenzband im Ultraschallbereich erfaßt wird. Dabei werden Stoßimpulse im Sensorsignal ermittelt, anhand derer elektrische Lagerströme im Wälzlager detektiert werden können. Auf diese Weise können sich am Wälzlager ausbreitende Schäden rechtzeitig vermieden werden.

Aus der älteren europäischen Patentanmeldung mit dem Anmeldeaktenzeichen 11174330.8 ist ein Verfahren zur Schadenserkennung an Getrieben bekannt, bei dem durch wenigstens einen Schwingungssensor Schwingungssignale erfaßt werden, die zu im Betrieb einer Getriebestufe auftretenden Schwingungen korrespondieren. Die erfaßten Schwingungssignale werden analysiert, um mögliche Schäden zu erkennen. Dabei wird mittels des Schwingungssensors ein Schwingungssignal erfaßt, welches zu Schwingungen korrespondiert, die durch Abwälz- und Stoßbewegung bei einem unter Last erfolgenden Zahneingriff miteinander kämmender Zahnräder verursacht werden. Das Schwingungssignal wird mit einem Kalibrier-Schwingungssignal verglichen. Aus einer Abweichung des Schwingungssignals vom Kalibrier-Schwingungssignal wird ein auf die Getriebestufe einwirkendes Drehmoment ermittelt. Das ermittelte Drehmoment wird wiederum bei einer Auswertung des Schwingungssignals hinsichtlich möglicher Schäden berücksichtigt.

Der vorliegenden Erfindung liegt die Aufgabe zugrunde, eine Vorrichtung und ein Verfahren zur zuverlässigen Zustandsüberwachung insbesondere von relativ langsam rotierenden mechanischen Bauteilen zu schaffen.

Diese Aufgabe wird erfindungsgemäß durch eine Zustandsüberwachungsvorrichtung mit den in Anspruch 1 angegebenen Merkmalen und durch ein Verfahren zur Zustandsüberwachung von rotierenden mechanischen Bauteilen mit den in Anspruch 18 angegebenen Merkmalen gelöst. Vorteilhafte Weiterbildungen der vorliegenden Erfindung sind in den abhängigen Ansprüchen angegeben.

Die erfindungsgemäße Zustandsüberwachungsvorrichtung für rotierende mechanische Bauteile umfaßt zumindest eine an einem Maschinenteil, das einen Lagersitz für ein zu überwachendes Bauteil bildet oder mit diesem verbunden ist, montierte Ultraschallsensoreinheit zur Erfassung von akustischen Emissionen des zu überwachenden Bauteils. Zusätzlich ist eine mit der Ultraschallsensoreinheit verbundene Signalverarbeitungseinheit vorgesehen, die eine Merkmalsextraktionseinheit zur Extraktion schadens- bzw. schädigungskennzeichnender Anteile aus durch die Ultraschallsensoreinheit generierten Meßsignalen aufweist. Außerdem umfaßt die Signalverarbeitungseinheit eine Berechnungseinheit zur Ermittlung zumindest eines Zustandskennwertes aus extrahierten Meßsignalmerkmalen. Das einen Lagersitz für das zu überwachende Bauteil bildende Maschinenteil kann beispielsweise ein Gehäuse oder Gehäuseteil sein. Dies ermöglicht eine besonders einfache Integration der erfindungsgemäßen Zustandsüberwachungsvorrichtung in eine bestehende Maschine oder Anlage. Das zu überwachende Bauteil kann beispielsweise eine langsamlaufende Welle oder ein langsamlaufender Lagerring mit einer Drehzahl von weniger als 20 Umdrehungen pro Minute sein. Damit ist die erfindungsgemäße Zustandsüberwachungsvorrichtung insbesondere für einen Einsatz in Mühlenantriebssystemen oder Windkraftanlagen geeignet.

Wird die Ultraschallsensoreinheit in Nähe einer zu überwachenden Lagerstelle montiert, können durch die Ultraschallsensoreinheit insbesondere impulshafte plastische Verformungen an Lager und zugehöriger Welle ermittelt werden. Zu impulshaften plastischen Verformungen zählen beispielsweise Rißbildung, Rißwachstum oder Erosion. Derartige Schäden oder Schädigungen können mit der erfindungsgemäßen Zustandsüberwachungsvorrichtung zuverlässig erkannt, bei einer Merkmalsextraktion Signalcharakteristika wie Impulsanstiegzeit, Maximalamplitude, Abfallzeit oder Signaleffektivwert ermittelt werden. Insbesondere durch Mischreibung gekennzeichnete schädigende Betriebszustände sind anhand einer Untersuchung auf eine Vielzahl kleiner impulshafter korrelierter Verformungen detektierbar.

Entsprechend einer besonders bevorzugten Ausgestaltung der erfindungsgemäßen Zustandsüberwachungsvorrichtung umfaßt die Signalverarbeitungseinheit eine Zustandsklassifikationseinheit zur Zustandsklassifizierung des zu überwachenden Bauteils anhand des zumindest einen Zustandskennwertes. Hiermit ist beispielsweise eine direkte Zustandsklassifikation von an einem Lager oder an einer Welle auftretender Reibung möglich. Im Vergleich zu bisherigen temperaturbasierten Überwachungsverfahren ermöglicht dies eine deutlich frühere und genauere Erkennung von Schäden bzw. Schädigungen.

Vorteilhafterweise umfaßt die Ultraschallsensoreinheit eine Meßsignalverstärkereinheit zur Spannungserhöhung. Dies trägt zu einem verbesserten Störsignalverhalten bei. Die Ultraschallsensoreinheit kann beispielsweise auf zuverlässige und kostengünstige Weise mittels eines Piezoelements, Dehnungsmeßstreifens oder eines mikro-elektro-mechanischen Systems realisiert sein.

Entsprechend einer weiteren Ausgestaltung der erfindungsgemäßen Zustandsüberwachungsvorrichtung ist die Ultraschallsensoreinheit mit einem nachgeschalten Bandpaß-Filter verbunden ist, der eine dem zu überwachenden Bauteil zugeordnete materialspezifische obere und untere Grenzfrequenz aufweist. Auf diese Weise können nicht-schadens- oder -schädigungsrelevante Signalanteile im Sinn einer Meßsignalverdichtung eliminiert werden. Eine weitere Meßsignalverdichtung kann erzielt werden, indem dem Bandpaß-Filter eine Hüllkurvenermittlungseinheit nachgeschaltet ist. Dabei kann die Hüllkurvenermittlungseinheit beispielsweise mit einem nachgeschalten Analog-Digital-Wandler verbunden sein, dessen Ausgang an einen digitalen Meßsignaleingang der Signalverarbeitungseinheit angeschlossen ist.

Darüber hinaus kann eine Hüllkurvenermittlung entsprechend einer weiteren vorteilhaften Weiterbildung anhand einer Gleichrichtung oder Tiefpaßfilterung erfolgen. Insbesondere kann die Hüllkurvenermittlung anhand einer Gleichrichtung und einer nachfolgenden gleitenden Effektiv- oder Mittelwertbildung erfolgen. Dies ermöglicht eine Generierung relativ störungsunempfindlicher komprimierter, aber dennoch zuverlässig schadens- bzw. schädigungskennzeichnender aufbereiteter Meßsignale.

Eine besondere einfache und effiziente Weiterverarbeitbarkeit aufbereiteter Meßsignale in der Signalverarbeitungseinheit kann entsprechend einer bevorzugten Ausgestaltung der vorliegenden erzielt werden, indem zur Hüllkurvenermittlung eine abschließende Zeitbereich-Frequenzbereich-Transformation erfolgt. Beispielsweise kann die abschließende Zeitbereich-Frequenzbereich-Transformation eine schnelle Fourier-Transformation sein, die sich mit vergleichsweise geringem Hardware-oder Softwareaufwand realisieren läßt.

Entsprechend einer besonders bevorzugten Weiterbildung der erfindungsgemäßen Zustandsüberwachungsvorrichtung sind die Ultraschallsensoreinheit, der Bandpaßfilter, die Hüllkurvenermittlungseinheit und die Signalverarbeitungseinheit Bestandteile eines integrierten Diagnosemoduls. Diese Weiterbildung weist eine besonders niedrige Störanfälligkeit auf. Darüber hinaus kann das integrierte Diagnosemodul zur Erfassung von durch impulshafte plastische Verformungen angeregten Schwingungen des zu überwachenden Bauteils mit materialspezifischen Frequenzen ausgestaltet sein. Die materialspezifischen Frequenzen können beispielsweise anwendungsabhängig konfigurierbar sein, so daß ein integriertes Diagnosemodul in einem breiten Spektrum von Anwendungsszenarien wiederverwendbar ist.

Zur Lokalisierung eines Schadens oder einer Schädigung kann vorteilhafterweise zumindest eine zweite Ultraschallsensoreinheit vorgesehen sein. In diesem Fall erfolgt eine Lokalisierung anhand eines Vergleichs von maximalen Signalamplituden, Effektivwerten bzw. Meßsignallaufzeiten.

Vorzugsweise erfolgt die Ermittlung des Zustandskennwertes durch Normierung eines Produkts von jeweils aktuellem Meßsignalmaximal- und effektivwert auf ein Produkt von zugeordneten Referenzwerten. Dies ermöglicht eine sehr hohe Verdichtung von in einem Meßsignal enthaltenen schadens- oder schädigungsrelevanten Zustandsinformationen und gleichzeitig eine Ableitung eines aussagekräftigen Zustandskennwertes. Dabei kann der Zustandskennwert beispielsweise auf einen Referenzkennwert für einen "Gutzustand" eines Lagers oder einer Welle normiert sein.

Entsprechend dem erfindungsgemäßen Verfahren zur Zustandsüberwachung von rotierenden mechanischen Bauteilen werden mittels zumindest einer an einem Maschinenteil, das einen Lagersitz für ein zu überwachendes Bauteil bildet oder mit diesem verbunden ist, montierten Ultraschallsensoreinheit akustische Emissionen des zu überwachenden Bauteils erfaßt. Darüber hinaus werden mittels einer mit der Ultraschallsensoreinheit verbundenen Signalverarbeitungseinheit schadens- bzw. schädigungskennzeichnende Anteile aus durch die Ultraschallsensoreinheit generierten Meßsignalen extrahiert. Aus extrahierten Meßsignalmerkmalen wird zumindest ein Zustandskennwert ermittelt. Vorzugsweise erfolgt anhand des zumindest einen Zustandskennwertes eine Zustandsklassifizierung des zu überwachenden Bauteils. Mit dem erfindungsgemäßen Verfahren ist eine Überwachung von Wälz- und Gleitlagern an relativ langsam laufenden Wellen auf Rißbildung und Verschleiß möglich. Darüber hinaus sind trotz deutlich reduzierter Datenmengen zuverlässige Aussagen über Lager- oder Wellenzustände möglich. Dies gilt auch für eine Erkennung unzulässiger Betriebsbereiche bzw. falscher Betriebsbedingungen von Lagern.

Mittels der Ultraschallsensoreinheit werden vorzugsweise durch impulshafte plastische Verformungen, wie Rißbildung, Rißwachstum oder Erosion, angeregte Schwingungen des zu überwachenden Bauteils erfaßt, die materialspezifischen Frequenzen aufweisen. Darüber hinaus kann das zu überwachende Bauteil eine langsamlaufende Welle oder ein langsamlaufender Lagerring mit einer Drehzahl von weniger als 20 Umdrehungen pro Minute sein. Daher ist das erfindungsgemäße Verfahren insbesondere für Anwendungsfälle in Windkraftanlagen oder Mühlenantriebssystemen geeignet.

Entsprechend einer vorteilhaften Weiterbildung des erfindungsgemäßen Verfahrens werden die durch die Ultraschallsensoreinheit erfaßten Meßsignale mittels eines Bandpaß-Filters gefiltert werden, der eine dem zu überwachenden Bauteil zugeordnete materialspezifische obere und untere Grenzfrequenz aufweist. Damit ist eine Anpassung an unterschiedliche Anwendungsszenarien möglich. Zusätzlich können die mittels des Bandpaß-Filters gefilterten Meßsignale zu einer Hüllkurve verdichtet werden. Vorzugsweise wird die Hüllkurve mittels eines Analog-Digital-Wandlers umgewandelt wird, dessen Ausgang an einen digitalen Meßsignaleingang der Signalverarbeitungseinheit angeschlossen ist. Dies ermöglicht eine sehr geringe Störanfälligkeit. Die Hüllkurve kann beispielsweise auf einfache Weise durch Gleichrichtung oder Tiefpaßfilterung ermittelt werden. Eine besonders robuste Meßsignalaufbereitung ergibt sich, wenn die Hüllkurve entsprechend einer weiteren Ausgestaltung des erfindungsgemäßen Verfahrens durch Gleichrichtung und nachfolgende gleitende Effektiv- oder Mittelwertbildung ermittelt wird.

Für eine einfache und effiziente Weiterverarbeitbarkeit aufbereiteter Meßsignale in der Signalverarbeitungseinheit wird die Hüllkurve entsprechend einer bevorzugten Ausgestaltung des erfindungsgemäßen Verfahrens abschließend einer Zeitbereich-Frequenzbereich-Transformation zugeführt. Eine besonders effiziente Implementierung der abschließenden Zeitbereich-Frequenzbereich-Transformation läßt sich durch eine schnelle Fourier-Transformation realisieren.

Vorzugsweise ist zur Lokalisierung eines Schadens oder einer Schädigung zumindest eine zweite Ultraschallsensoreinheit vorgesehen. In diesem Fall wird ein Schaden oder eine Schädigung anhand eines Vergleichs von maximalen Signalamplituden, Effektivwerten und/oder Meßsignallaufzeiten lokalisiert.

Entsprechend einer besonders bevorzugten Weiterbildung des erfindungsgemäßen Verfahrens wird der Zustandskennwert durch Normierung eines Produkts von jeweils aktuellem Meßsignalmaximal- und effektivwert auf ein Produkt von zugeordneten Referenzwerten ermittelt. Dies ermöglicht eine sehr hohe Verdichtung von in einem Meßsignal enthaltenen schadens- oder schädigungsrelevanten Zustandsinformationen auf einen aussagekräftigen Zustandskennwert.

Die vorliegende Erfindung wird nachfolgend an einem Ausführungsbeispiel anhand der Zeichnung näher erläutert. Es zeigt

Figur 1      eine schematische Darstellung einer Zustandsüberwachungsvorrichtung für rotierende mechanische Bauteile und eines Ablaufs eines Verfahren zur Zustandsüberwachung,

Figur 2      eine erste Variante einer Zustandsüberwachungsvorrichtung für rotierende mechanische Bauteile,

Figur 3      eine zweite Variante einer Zustandsüberwachungsvorrichtung für rotierende mechanische Bauteile,

Figur 4      eine dritte Variante einer Zustandsüberwachungsvorrichtung für rotierende mechanische Bauteile.

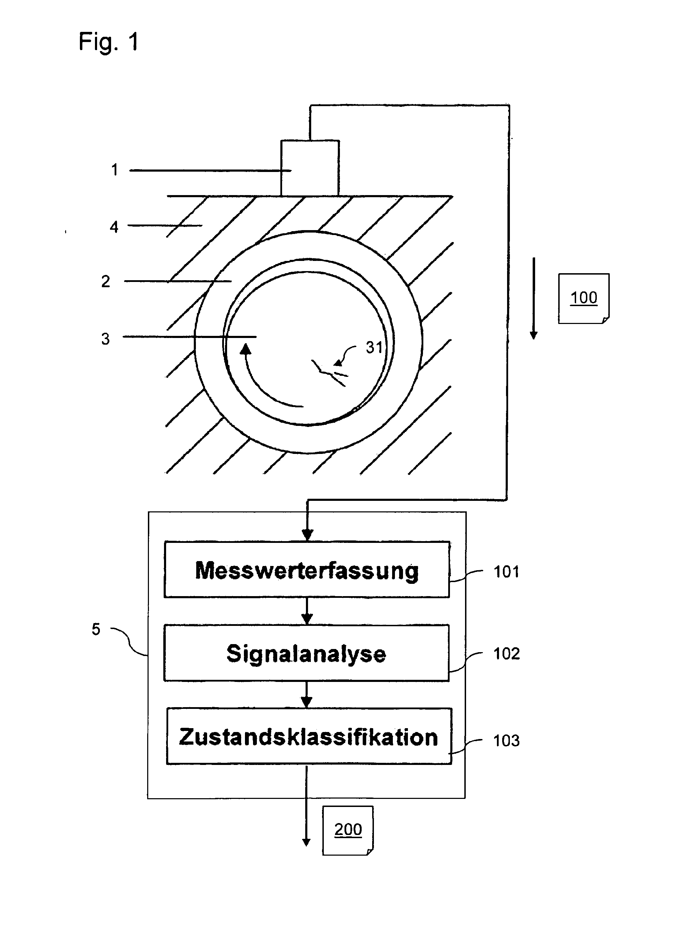

Die in Figur 1 dargestellte Zustandsüberwachungsvorrichtung umfaßt eine an einem Gehäuse 4, das einen Lagersitz für ein Lager 2 einer zu überwachenden Welle 3 bildet, montierten Ultraschallsensoreinheit 1 zur Erfassung von akustischen Emissionen der zu überwachenden Welle 3. Die Ultraschallsensoreinheit 1 kann beispielsweise mittels eines Piezoelements, Dehnungsmeßstreifens oder eines mikro-elektro-mechanischen Systems (MEMS) realisiert sein. Im vorliegenden Ausführungsbeispiel weist die Welle 3 eine Drehzahl von weniger als 20 Umdrehungen pro Minute sowie einen schematisch dargestellten Riß 31 auf. Die Ultraschallsensoreinheit 1 ist mit einer Signalverarbeitungseinheit 5 verbunden, die insbesondere eine Merkmalsextraktionseinheit und eine Berechnungseinheit umfaßt. Entsprechend Schritt 101 werden zunächst von der Ultraschallsensoreinheit 1 generierte Meßsignale 100 der Signalverarbeitungseinheit 5 zugeführt. Anschließend werden gemäß Schritt 102 mittels der Merkmalsextraktionseinheit aus durch die Ultraschallsensoreinheit generierten Meßsignalen schadens- bzw. schädigungskennzeichnende Anteile extrahiert und mittels der Berechnungseinheit zumindest ein Zustandskennwert aus extrahierten Meßsignalmerkmalen ermittelt.

Darüber hinaus umfaßt die Signalverarbeitungseinheit 5 eine Zustandsklassifikationseinheit. Mittels der Zustandsklassifikationseinheit wird entsprechend Schritt 103 eine Zustandsklassifizierung 200 der zu überwachenden Welle 3 aus dem zumindest einen Zustandskennwert abgeleitet.

Die Ultraschallsensoreinheit 1 kann im vorliegenden Ausführungsbeispiel grundsätzlich Wege, Geschwindigkeiten, Beschleunigungen oder Druckänderungen in einem materialspezifischen Frequenzbereich für Schädigungsprozesse erfassen. Bei Stahl liegt dieser materialspezifische Frequenzbereich beispielsweise um 110kHz. Des weiteren werden mittels der Ultraschallsensoreinheit 1 durch impulshafte plastische Verformungen angeregte Schwingungen eines zu überwachenden Bauteils erfaßt, die materialspezifischen Frequenzen aufweisen.

Bei einer Schädigung von Wellen, Wälzkörpern, Lagerringen oder anderen belasteten Bauteilen erfolgt eine Materialbelastung, die eine jeweilige materialabhängige Belastungsgrenze überschreitet. In diesem Fall finden keine elastischen Verformungen mehr statt, sondern impulshafte plastische Verformungen, wie Rißbildung, Rißwachstum oder Erosion. Bei impulshaften plastischen Verformungen werden materialcharakteristische Frequenzen in einem Festkörper in Form von akustischen Emissionen angeregt, die sich von einem Schadensort als Quelle durch den Festkörper ausbreiten. Mittels der Ultraschallsensoreinheit 1 können diese akustischen Emissionen detektiert werden. Anhand von Signalcharakteristika der akustischen Emissionen, wie Impulsanstiegszeit, Impulsabfallzeit, Maximalamplitude oder Effektivwert, ist es möglich, ein Ausmaß plastischer Verformungen zu ermitteln. Auch Mischreibung, die üblicherweise materialabtragend ist und in einem normalen Betriebsfall nicht auftreten soll, kann auf eine Überlagerung vieler kleiner impulshafter akustischer Emissionen zurückgeführt werden. Somit ist mittels der Ultraschallsensoreinheit 1 auch unerwünschte Mischreibung detektierbar.

Generell läßt sich Reibung auf Grundlage akustischer Emissionen und des zumindest einen Zustandskennwerts direkt detektieren. Damit kann festgestellt werden, ob ein Lager in einem falschen Betriebsbereich betrieben wird, beispielsweise aufgrund zu hoher axialer oder radialer Lasten, zu wenig Schmiermittel oder zu geringer Viskosität. Zeitlich veränderliche Fehlbelastungen, beispielsweise bei Unwucht, Druckabfall in einem Ölkreislauf oder anderen dynamischen Last- und Betriebsbedingungsänderungen, können anhand einer Modulation des Zustandskennwerts bzw. anhand einer Maximalamplitude oder eines Effektivwerts akustischer Emissionen erkannt werden, beispielsweise anhand eines Hüllkurvenspektrums oder durch Ordnungsanalyse.

Der Zustandskennwert Z(t) wird vorzugsweise durch Normierung eines Produkts von jeweils aktuellem Meßsignalmaximal- und effektivwert auf ein Produkt von zugeordneten Referenzwerten entsprechend nachstehendem Ausdruck ermittelt.

$$Z(t) = \frac{x_{\max}(t) \cdot x_{RMS}(t)}{x_{\max,ref} \cdot x_{RMS,ref}}$$

In äußerst vorteilhafter Weise kann der Zustandskennwert als logarithmisches Maß dargestellt werden. Grundsätzlich ist auch eine Verwendung eines reziproken Zustandskennwerts möglich. Des weiteren bietet eine Frequenzanalyse einer Hüllkurve akustischer Emissionen besondere Vorteile bei einer Erkennung von Schmiermittelverunreinigungen bzw. periodisch wiederkehrenden Reibungsänderungen. Periodisch wiederkehrende Reibungsänderungen können beispielsweise durch Fehler auf einer Oberfläche einer rotierenden Welle oder Druckschwankungen bedingt sein. Darüber hinaus ist eine Bildung von Referenzwerten $x_{\max,\,ref}$, $x_{RMS,\,ref}$ zur Normierung des Zustandskennwerts auf einen Gut- bzw. Normzustand besonders einfach, da diese Referenzwerte in einem erwünschten Betrieb unter Flüssigkeitsreibung nur sehr schwach von Drehzahl, Schmiermitteltemperatur und Lagerlast abhängen.

Eine Hüllkurvenermittlung kann auf vielfältige Weise erfolgen, beispielsweise durch Gleichrichtung und Tiefpaßfilterung, durch Berechnung eines gleitenden Effektiv- oder Mittelwerts oder durch Hilberttransformation. Eine anschließende schnelle Fourier-Transformation (FFT) ermöglicht eine Ermittlung von Frequenzen, mit denen periodische Anteile oder auch Impulse in akustischen Emissionen wiederkehren. Auch Korrelationsoder Autokorrelationsverfahren, beispielsweise unter Variation einer Zeitfensterlänge für eine Untersuchung verschiedener Frequenzen, können für eine Frequenzanalyse verwendet werden. Dies bietet sich insbesondere an, wenn zu untersuchende Frequenzen bereits bekannt sind. Dies ermöglicht einen einfachen und schnellen Berechnungsalgorithmus sowie einen verbesserten Signal-Rausch-Abstand, insbesondere bei der Mittelung über mehrere Perioden.

Auf eine Hüllkurve akustischer Emissionen können beispielsweise Verfahren angewandt werden, die bei einer Schwingungsanalyse von niederfrequenten Signalen mit einer Frequenz bis zu 20 kHz üblich sind. Hierzu zählen beispielsweise Ordnungsanalyse oder Ermittlung eines Hüllkurvenspektrums. Durch eine derartige Schwingungsanalyse können Schädigungen anhand ihrer Frequenzen zu Bauteilen der Fehlbetriebsbedingungen, wie Unwucht oder Fehlausrichtung, zugeordnet werden. Insbesondere bei langsam drehenden Lagern und Wellen läßt sich somit sehr genau ein Betrieb innerhalb eines schädigender Betriebsbereich erkennen, der beispielsweise durch plastische Verformungen oder Mischreibung gekennzeichnet ist.

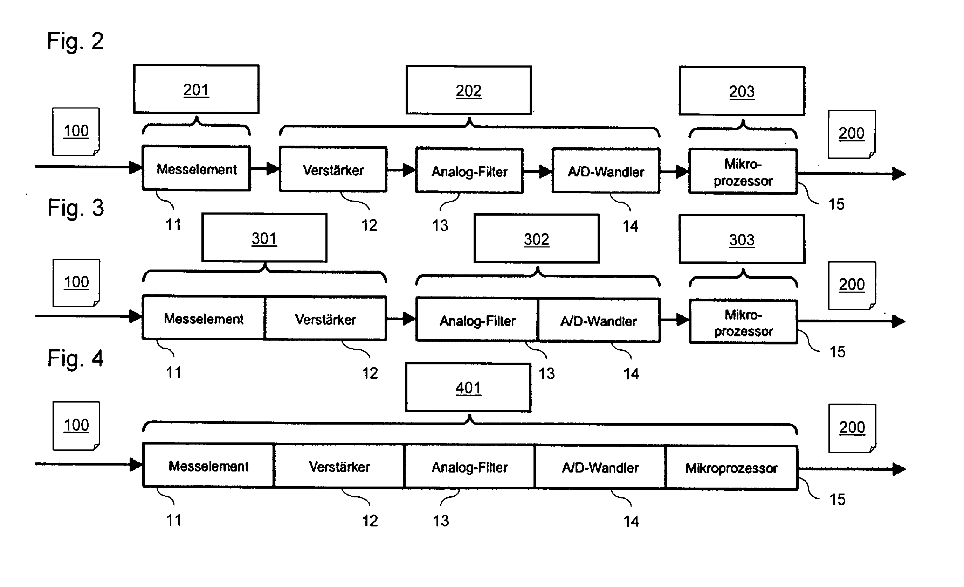

Bei der in Figur 2 dargestellten erste Variante einer Zustandsüberwachungsvorrichtung für rotierende mechanische Bauteile umfaßt die Ultraschallsensoreinheit 201 lediglich ein Meßelement 11. Der Ultraschallsensoreinheit 201 ist entsprechend Figur 2 eine Signalaufbereitungseinheit 202 nachgeschaltet, die einen Verstärker 12 zur Meßsignalspannungserhöhung, einen als Bandpaß-Filter ausgestalten Analog-Filter 13 und einen Analog-Digital-Wandler 14 umfaßt. Digital umgewandelte Ausgangssignale der Signalaufbereitungseinheit 202 werden anschließend bereits oben beschriebener Signalverarbeitungseinheit 203 zugeführt, die im wesentlichen einen Mikroprozessor 15 umfaßt, durch den Merkmalsextraktion und Ermittlung des Zustandskennwerts realisiert werden. Der Analog-Filter 13 weist eine anpaßbare dem zu überwachenden Bauteil zugeordnete materialspezifische obere und untere Grenzfrequenz auf, so daß nicht schadens- oder schädigungsrelevante Signalanteile eliminiert werden können. Durch den Analog-Filter 13 bandpaßgefilterte Meßsignale können beispielsweise mittels des Analog-Digital-Wandlers 14 zu einer Hüllkurve verdichtet werden.

Die in Figur 3 dargestellte zweite Variante einer Zustandsüberwachungsvorrichtung für rotierende mechanische Bauteile weist gegenüber der ersten Variante eine integrierte Ultraschallsensoreinheit 301 auf, die neben dem Meßelement 11 auch den Verstärker 12 umfaßt und aufgrund dessen eine erhöhte Störfestigkeit bietet. Dementsprechend sind der Analog-Filter 13 und der Analog-Digital-Wandler 14 zusammengefaßt in einer der integrierten Ultraschallsensoreinheit 301 nachgeschalteten Filter-/Wandlereinheit 302. Die Signalverarbeitungseinheit 303 der in Figur 3 dargestellten zweiten Variante entspricht funktionell der Signalverarbeitungseinheit 203 der ersten Variante.

Gegenüber der ersten und zweiten Variante weist die in Figur 4 dargestellte dritte Variante einer Zustandsüberwachungsvorrichtung ein integriertes Diagnosemodul auf 401, welches das Meßelement 11, den Verstärker 12, den Analog-Filter 13, den Analog-Digital-Wandler 14 und den Mikroprozessor 15 umfaßt. Diese Variante weist eine besonders niedrige Störanfälligkeit auf. Ein integriertes Diagnosemodul 401 kann darüber hinaus Aufgaben, wie Plausibilitätsprüfung von akustischen Emissionen zugeordneten Rohsignalen, Validierung von Zustandsdiagnosen oder Signalüberprüfung auf Störsignalanteile bzw. -quellen, wahrnehmen.

Zur Lokalisierung eines Schadens oder einer Schädigung sind bevorzugt zwei oder mehr Ultraschallsensoreinheiten vorgesehen. Damit kann ein Schaden oder eine Schädigung anhand eines Vergleichs von maximalen Signalamplituden, Effektivwerten bzw. Meßsignallaufzeiten lokalisiert werden. Mit 3 Ultraschallsensoreinheiten, die ein Koordinatensystem aufspannen, kann erfaßt werden, ob ein einzelner durch eine akustische Emission detektierbarer Schädigungsimpuls von einer Welle, einem Lagerring oder einem Wälzkörpern herrührt. Dies ist auch bei sehr geringen Drehzahlen, insbesondere auch bei verschwindender Drehzahl in einem statischen Fall, möglich und äußerst praxisrelevant. Sehr geringe Drehzahlen und statische Fälle lassen sich daher mittels oben beschriebener Zustandsüberwachungsvorrichtung überwachen. Hierbei kann ausgenutzt werden, daß in akustischen Emissionen freigesetzte Energie von angreifenden Lastvektoren abhängt. Dabei stellt eine Drehbewegung nur eine von vielen möglichen Lastformen dar.

**Patentansprüche**

1. Zustandsüberwachungsvorrichtung für rotierende mechanische Bauteile mit

   - zumindest einer an einem Maschinenteil, das einen Lagersitz für ein zu überwachendes Bauteil bildet oder mit diesem verbunden ist, montierten Ultraschallsensoreinheit zur Erfassung von akustischen Emissionen des zu überwachenden Bauteils,
   - einer mit der Ultraschallsensoreinheit verbundenen Signalverarbeitungseinheit mit einer Merkmalsextraktionseinheit zur Extraktion schadens- und/oder schädigungskennzeichnender Anteile aus durch die Ultraschallsensoreinheit generierten Meßsignalen und mit einer Berechnungseinheit zur Ermittlung zumindest eines Zustandskennwertes aus extrahierten Meßsignalmerkmalen.

2. Zustandsüberwachungsvorrichtung nach Anspruch 1,
   bei der die Signalverarbeitungseinheit eine Zustandsklassifikationseinheit zur Zustandsklassifizierung des zu überwachenden Bauteils anhand des zumindest einen Zustandskennwertes umfaßt.

3. Zustandsüberwachungsvorrichtung nach einem der Ansprüche 1 oder 2,
   bei der die Ultraschallsensoreinheit eine Meßsignalverstärkereinheit zur Spannungserhöhung umfaßt.

4. Zustandsüberwachungsvorrichtung nach einem der Ansprüche 1 bis 3,
   bei der die Ultraschallsensoreinheit mittels eines Piezoelements, Dehnungsmeßstreifens oder eines mikro-elektro-mechanischen Systems realisiert ist.

5. Zustandsüberwachungsvorrichtung nach einem der Ansprüche 1 bis 4,
   bei der die Ultraschallsensoreinheit mit einem nachgeschalten Bandpaß-Filter verbunden ist, der eine dem zu überwachenden Bauteil zugeordnete materialspezifische obere und untere Grenzfrequenz aufweist.

**6.** Zustandsüberwachungsvorrichtung nach Anspruch 5, bei der dem Bandpaß-Filter eine Hüllkurvenermittlungseinheit zur Meßsignalverdichtung nachgeschaltet ist.

**7.** Zustandsüberwachungsvorrichtung nach Anspruch 6, bei der die Hüllkurvenermittlungseinheit mit einem nachgeschalten Analog-Digital-Wandler verbunden ist, dessen Ausgang an einen digitalen Meßsignaleingang der Signalverarbeitungseinheit angeschlossen ist.

**8.** Zustandsüberwachungsvorrichtung nach Anspruch 7, bei der eine Hüllkurvenermittlung anhand einer Gleichrichtung oder Tiefpaßfilterung erfolgt.

**9.** Zustandsüberwachungsvorrichtung nach Anspruch 8, bei der die Hüllkurvenermittlung anhand einer Gleichrichtung und einer nachfolgenden gleitenden Effektiv- oder Mittelwertbildung erfolgt.

**10.** Zustandsüberwachungsvorrichtung nach einem der Ansprüche 7 bis 9, bei der zur Hüllkurvenermittlung eine abschließende Zeitbereich-Frequenzbereich-Transformation erfolgt.

**11.** Zustandsüberwachungsvorrichtung nach Anspruch 10, bei der die abschließende Zeitbereich-Frequenzbereich-Transformation eine schnelle Fourier-Transformation ist.

**12.** Zustandsüberwachungsvorrichtung nach einem der Ansprüche 1 bis 11, bei der die Ultraschallsensoreinheit, der Bandpaßfilter, die Hüllkurvenermittlungseinheit und die Signalverarbeitungseinheit Bestandteile eines integrierten Diagnosemoduls sind.

**13.** Zustandsüberwachungsvorrichtung nach Anspruch 12, bei der das integrierte Diagnosemodul zur Erfassung von durch impulshafte plastische Verformungen angeregten Schwingungen des zu überwachenden Bauteils mit materialspezifischen Frequenzen ausgestaltet ist.

**14.** Zustandsüberwachungsvorrichtung nach einem der Ansprüche 1 bis 13, bei der das zu überwachende Bauteil eine langsamlaufende Welle oder ein langsamlaufender Lagerring mit einer Drehzahl von weniger als 20 Umdrehungen pro Minute ist.

**15.** Zustandsüberwachungsvorrichtung nach einem der Ansprüche 1 bis 14, bei der das einen Lagersitz für das zu überwachende Bauteil bildende Maschinenteil ein Gehäuse oder Gehäuseteil ist.

**16.** Zustandsüberwachungsvorrichtung nach einem der Ansprüche 1 bis 15, bei der zur Lokalisierung eines Schadens oder einer Schädigung zumindest eine zweite Ultraschallsensoreinheit vorgesehen ist, und bei der eine Lokalisierung anhand eines Vergleichs von maximalen Signalamplituden, Effektivwerten und/oder Meßsignallaufzeiten erfolgt.

**17.** Zustandsüberwachungsvorrichtung nach einem der Ansprüche 1 bis 16, bei der die Ermittlung des Zustandskennwertes durch Normierung eines Produkts von jeweils aktuellem Meßsignalmaximal-und effektivwert auf ein Produkt von zugeordneten Referenzwerten erfolgt.

**18.** Verfahren zur Zustandsüberwachung von rotierenden mechanischen Bauteilen, bei dem

- mittels zumindest einer an einem Maschinenteil, das einen Lagersitz für ein zu überwachendes Bauteil bildet oder mit diesem verbunden ist, montierten Ultraschallsensoreinheit akustische Emissionen des zu überwachenden Bauteils erfaßt werden,
- mittels einer mit der Ultraschallsensoreinheit verbundenen Signalverarbeitungseinheit schadens- und/oder schädigungskennzeichnende Anteile aus durch die Ultraschallsensoreinheit generierten Meßsignalen extrahiert und zumindest ein Zustandskennwert aus extrahierten Meßsignalmerkmalen ermittelt wird.

**19.** Verfahren nach Anspruch 18, bei dem anhand des zumindest einen Zustandskennwertes eine Zustandsklassifizierung des zu überwachenden Bauteils erfolgt.

**20.** Verfahren nach einem der Ansprüche 18 oder 19, bei dem die durch die Ultraschallsensoreinheit erfaßten Meßsignale mittels eines Bandpaß-Filters gefiltert werden, der eine dem zu überwachenden Bauteil zugeordnete materialspezifische obere und untere Grenzfrequenz aufweist.

**21.** Verfahren nach Anspruch 20, bei dem die mittels des Bandpaß-Filters gefilterten Meßsignale zu einer Hüllkurve verdichtet werden.

**22.** Verfahren nach Anspruch 21,
bei dem die Hüllkurve mittels eines Analog-Digital-Wandlers umgewandelt wird, dessen Ausgang an einen digitalen Meßsignaleingang der Signalverarbeitungseinheit angeschlossen ist.

**23.** Verfahren nach Anspruch 22,
bei dem die Hüllkurve durch Gleichrichtung oder Tiefpaßfilterung ermittelt wird.

**24.** Verfahren nach Anspruch 23,
bei dem die Hüllkurve durch Gleichrichtung und nachfolgende gleitende Effektiv- oder Mittelwertbildung ermittelt wird.

**25.** Verfahren nach einem der Ansprüche 21 bis 24,
bei dem die Hüllkurve abschließend einer Zeitbereich-Frequenzbereich-Transformation zugeführt wird.

**26.** Verfahren nach Anspruch 25,
bei dem die abschließende Zeitbereich-Frequenzbereich-Transformation eine schnelle Fourier-Transformation ist.

**27.** Verfahren nach einem der Ansprüche 18 bis 26,
bei dem mittels der Ultraschallsensoreinheit durch impulshafte plastische Verformungen angeregte Schwingungen des zu überwachenden Bauteils, die materialspezifischen Frequenzen aufweisen, erfaßt werden.

**28.** Verfahren nach einem der Ansprüche 18 bis 27,
bei der das zu überwachende Bauteil eine langsamlaufende Welle oder ein langsamlaufender Lagerring mit einer Drehzahl von weniger als 20 Umdrehungen pro Minute ist.

**29.** Verfahren nach einem der Ansprüche 18 bis 28,
bei dem zur Lokalisierung eines Schadens oder einer Schädigung zumindest eine zweite Ultraschallsensoreinheit vorgesehen ist, und bei dem ein Schaden oder eine Schädigung anhand eines Vergleichs von maximalen Signalamplituden, Effektivwerten und/oder Meßsignallaufzeiten lokalisiert wird.

**30.** Verfahren nach einem der Ansprüche 18 bis 29,
bei dem der Zustandskennwert durch Normierung eines Produkts von jeweils aktuellem Meßsignalmaximal- und effektivwert auf ein Produkt von zugeordneten Referenzwerten ermittelt wird.

## Fig. 1

1

4

2

3

31

100

5

| Messwerterfassung | 101 |

| Signalanalyse | 102 |

| Zustandsklassifikation | 103 |

200

Fig. 2

Fig. 3

Fig. 4

Europäisches
Patentamt

European
Patent Office

Office européen
des brevets

# EUROPÄISCHER RECHERCHENBERICHT

**Nummer der Anmeldung**

EP 12 00 0622

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2004/059399 A2 (RSL ELECTRONICS LTD [IL]; KLEIN RENATA [IL]) 15. Juli 2004 (2004-07-15) * Seite 49, Zeile 1 - Seite 49, Zeile 5; Anspruch 1; Abbildungen 1,4 * ----- | 1-30 | INV. G01M13/04 G01N29/14 |
| X | WO 2009/037077 A2 (SIEMENS AG [DE]; HOFER JOACHIM [DE]; HOEGE HARALD [DE]; LEUTELT LUTZ []) 26. März 2009 (2009-03-26) * das ganze Dokument * ----- | 1-30 | |

**RECHERCHIERTE SACHGEBIETE (IPC)**

G01M

Der vorliegende Recherchenbericht wurde für alle Patentansprüche erstellt

| Recherchenort | Abschlußdatum der Recherche | Prüfer |
|---|---|---|
| Den Haag | 12. Juni 2012 | Vytlacilová, Lenka |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
...............................................................................................
& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 12 00 0622

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-06-2012

| Im Recherchenbericht angeführtes Patentdokument | Datum der Veröffentlichung | Mitglied(er) der Patentfamilie | Datum der Veröffentlichung |
|---|---|---|---|
| WO 2004059399 A2 | 15-07-2004 | AU 2003288519 A1<br>CA 2512383 A1<br>EP 1581839 A2<br>US 2005096873 A1<br>WO 2004059399 A2 | 22-07-2004<br>15-07-2004<br>05-10-2005<br>05-05-2005<br>15-07-2004 |
| WO 2009037077 A2 | 26-03-2009 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1387165 A1
- EP 2110649 B1
- WO 2010009750 A1
- EP 2011067078 W
- EP 11174330 A